# EUROPÄISCHE PATENTSCHRIFT

(11) **EP 3 523 373 B1**
(45) Veröffentlichungstag und Bekanntmachung des Hinweises auf die Patenterteilung: **25.03.2020**
(21) Anmeldenummer: 16778386.9
(22) Anmeldetag: 07.10.2016
(51) Int. Cl.: C08L 83/10

(54) **SILOXAN-ORGANO-COPOLYMERE ENTHALTENDE POLYMERZUSAMMENSETZUNGEN**
POLYMER COMPOSITIONS CONTAINING SILOXANE-ORGANO-COPOLYMERS
COMPOSITIONS POLYMÈRES CONTENANT DES COPOLYMÈRES ORGANO-SILOXANE

(43) Veröffentlichungstag der Anmeldung: 14.08.2019
(73) Patentinhaber: Wacker Chemie AG, 81737 München (DE)
(72) Erfinder: SCHAEFER, Oliver, 84489 Burghausen (DE)
(74) Vertreter: Budczinski, Angelika
(86) Internationale Anmeldenummer: PCT/EP2016/074073
(87) Internationale Veröffentlichungsnummer: WO 2018/065072

(56) Entgegenhaltungen:
- DE-A1- 3 709 238
- US-A- 5 605 978
- US-A1- 2015 183 990

## Beschreibung

Die Erfindung betrifft Polymerzusammensetzungen enthaltend Siloxan-Organo-Copolymere sowie organische Polyamide, insbesondere Copolyamide, Verfahren zu deren Herstellung und deren Verwendung.

Silicone besitzen eine ausgezeichnete Temperatur-, UV- und Bewitterungsstabilität. Dabei behalten sie ihre elastischen Eigenschaften bei tieferen Temperaturen bei und neigen deshalb auch nicht zur Versprödung. Daneben besitzen sie spezielle wasserabweisende und antihaftende Oberflächeneigenschaften. Darüber hinaus können mit Siliconen sehr weiche Elastomere hergestellt werden, die u.a. häufig in medizinischen Anwendungen verwendet werden.

Thermoplastische Copolyamide hingegen zeigen z.T. hervorragende Haftung auf verschiedenen Oberflächen und ausgezeichnete mechanische Eigenschaften wie Reißfestigkeiten und Reißdehnungen. Hinzu kommt eine niedrige Dichte, gute Chemikalien- und Lösungsmittelbeständigkeit, sehr gute Kälteschlagzähigkeit sowie die ausgezeichnete Temperaturstabilität dieser Produkte, die teilweise deutlich höher ist als die von Polyurethanen. Nachteilig an thermoplastischen Copolyamiden ist jedoch die Tatsache, dass die Herstellung weicherer Typen technisch schwierig ist, da die resultierenden Produkte bei niedriger Shore A Härte schnell sehr klebrig werden.

Es hat Versuche gegeben, diese beiden Materialklassen durch einfaches Mischen zu verbessern. Hierbei sei DE69110279T2 erwähnt, bei der hochmolekulare Silikoncopolymere in relativ geringen Mengen in thermoplastische Polyamide eingemischt wurden, womit die Oberflächeneigenschaften, wie z.B. Kontaktwinkel und Haftungseigenschaften, verändert wurden. Ein signifikanter Einfluss auf die mechanischen Eigenschaften wie z.B. E-Modul, Streckgrenze oder Reißfestigkeiten wurde nicht beobachtet.

Durch Einbringen von Silikonen in Polyamidstrukturen, wie z.B. von Kiyotsukuri et al. in J. Polymer. Sci. A 25 (1987) 1591 beschrieben, werden silikonhaltige Copolyamide erhalten, welche ebenfalls thermoplastische Eigenschaften haben. Die so herstellbaren thermoplastischen Silikone zeigen jedoch aufgrund der verwendeten kurzen Silikonsegmente keine wesentliche Verringerung der Härte.

US2015/183990A1 offenbart Polymerzusammensetzungen enthaltend ein Polyamidpolymer und ein Polysiloxan-Polyamid- oder Polysiloxan-Polyurethan-Copolymer mit 0 bis 1500 Siloxaneinheiten, sowie ein Verfahren zur Herstellung derselben und daraus hergestellte Formkörper.

DE3709238A1 offenbart Polymerzusammensetzungen enthaltend ein Polyamidpolymer und ein Polydiorganosiloxan-Carbonamid-Copolymer mit 55 bis 1000 Siloxaneinheiten, sowie ein Verfahren zur Herstellung derselben und daraus hergestellte Formkörper.

Gegenstand der Erfindung sind Polymerzusammensetzungen enthaltend
(A) mindestens ein Polyamidpolymer und
(B) mindestens ein Siloxan-Organo-Copolymer mit 50 bis 3000 Siloxaneinheiten pro Siloxansegment und mindestens einem Organosegment mit mindestens einer Gruppe ausgewählt aus Estergruppen, Amid-Gruppen, Urethangruppen, Harnstoffgruppen und Thioharnstoffgruppen. der allgemeinen Formel (1) 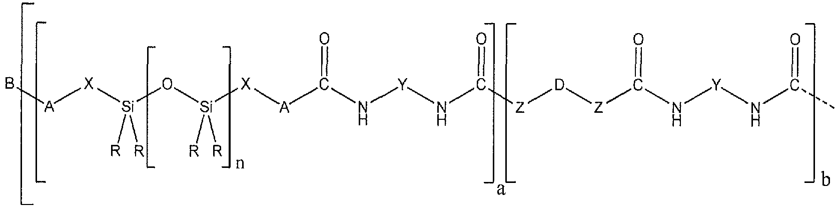 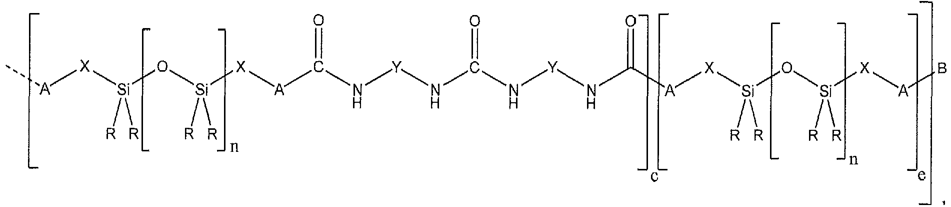 wobei
   - **R**: gleich oder verschieden sein kann und einen einwertigen, SiC-gebundenen, gegebenenfalls durch Fluor- oder Chlor-substituierten Kohlenwasserstoffrest mit 1 bis 20 Kohlenstoffatomen bedeutet,
   - **X**: gleich oder verschieden sein kann und einen Alkylen-Rest mit 1 bis 20 Kohlenstoffatomen, in dem einander nicht benachbarte Methyleneinheiten durch Gruppen -O- ersetzt sein können, bedeutet,
   - **A**: gleich oder verschieden sein kann und Sauerstoffatom, Schwefelatom oder eine Aminogruppe -NR'- bedeutet,
   - **Z**: gleich oder verschieden sein kann und ein Sauerstoffatom oder eine Aminogruppe -NR'- darstellt,
   - **R'**: gleich oder verschieden sein kann und Wasserstoffatom oder einen Alkylrest mit 1 bis 10 Kohlenstoffatomen bedeutet,
   - **Y**: gleich oder verschieden sein kann und einen zweiwertigen, gegebenenfalls durch Fluor oder Chlor substituierten Kohlenwasserstoffrest mit 1 bis 20 Kohlenstoffatomen bedeutet,
   - **D**: gleich oder verschieden sein kann und einen zweiwertigen, gegebenenfalls durch Fluor-, Chlor- oder C₁-C₆-Alkylestergruppen substituierten Kohlenwasserstoffrest bedeutet, in dem einander nicht benachbarte Methyleneinheiten durch Gruppen -O-, -COO-, -OCO- oder -OCOO- ersetzt sein können,
   - **B**: gleich oder verschieden sein kann und Wasserstoffatom oder einen funktionellen oder nicht-funktionellen organischen oder siliziumorganischen Rest darstellt,
   - **n**: gleich oder verschieden sein kann und eine Zahl von 50 bis 2999 ist,
   - **a**: eine Zahl von mindestens 1 ist,
   - **b**: 0 oder eine Zahl von 1 bis 100 ist,
   - **c**: 0 oder eine Zahl von 1 bis 100 ist,
   - **d**: eine Zahl von mindestens 1 ist und
   - **e**: eine Zahl von 0 oder 1 ist.

Bevorzugt liegt das Gewichtsverhältnis des Siloxan-Organo-Copolymers (B) zu dem Polyamidpolymer (A) im Bereich von 5:95 bis 80:20, besonders bevorzugt bei 10:90 bis 60:40, insbesondere bei 20:80 bis 50:50.

Bevorzugt sind die erfindungsgemäßen Polymerzusammensetzungen thermoplastisch.

Bevorzugt sind die erfindungsgemäßen Polymerzusammensetzungen wiederverarbeitbar.

Beispiele für R sind Alkylreste wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste wie der n-Hexylrest; Heptylreste wie der n-Heptylrest; Octylreste wie der n-Octylrest und iso-Octylreste wie der 2,2,4-Trimethylpentylrest; Nonylreste wie der n-Nonylrest; Decylreste wie der n-Decylrest; Dodecylreste wie der n-Dodecylrest; Octadecylreste wie der n-Octadecylrest; Cycloalkylreste wie der Cyclopentyl-, Cyclohexyl-, Cycloheptylrest und Methylcyclohexylreste; Alkenylreste wie der Vinyl-, 1-Propenyl- und der 2-Propenylrest; Arylreste wie der Phenyl-, Naphthyl-, Anthryl- und Phenanthrylrest; Alkarylreste wie o-, m-, p-Tolylreste; Xylylreste und Ethylphenylreste; oder Aralkylreste wie der Benzylrest oder der α- und der β-Phenylethylrest.

Beispiele für halogenierte Reste R sind Halogenalkylreste wie der 3,3,3-Trifluor-n-propylrest, der 2,2,2,2',2',2'-Hexafluorisopropylrest und der Heptafluorisopropylrest.

Vorzugsweise bedeutet Rest R einen einwertigen, gegebenenfalls mit Fluor- und/oder Chloratomen substituierten Kohlenwasserstoffrest mit 1 bis 20 Kohlenstoffatomen, besonders bevorzugt einen Kohlenwasserstoffrest mit 1 bis 6 Kohlenstoffatomen, insbesondere um den Methyl-, Ethyl-, Vinyl- oder Phenylrest.

Beispiele für Rest X sind die unten für Rest Y angegebenen Alkylenreste.

Vorzugsweise handelt es sich bei Rest X um einen Alkylenrest mit 1 bis 10 Kohlenstoffatomen, besonders bevorzugt um den Methylen- oder n-Propylenrest.

Vorzugsweise bedeutet A einen Rest -NR'- mit R' gleich der oben genannten Bedeutung, besonders bevorzugt einen Rest -NH-.

Bevorzugt handelt es sich bei Rest R' um Wasserstoffatom.

Vorzugsweise hat Rest Z die Bedeutung von -O- oder -NH-.

Beispiele für Rest Y sind Alkylenreste wie der Methylen-, Ethylen-, n-Propylen-, iso-Propylen-, n-Butylen-, iso-Butylen-, tert.-Butylen-, n-Pentylen-, iso-Pentylen-, neo-Pentylen-, tert.-Pentylenrest, Hexylenreste, Heptylenreste, Octylenreste, Nonylenreste, Decylenreste, Dodecylenreste oder Octadecylenreste; Cycloalkylenreste wie Cyclopentylenrest, 1,4-Cyclohexylenrest, Isophoronylenrest oder der 4,4'-Methylen-dicyclohexylenrest; Alkenylenreste wie der Vinylen-, n-Hexenylen-, Cyclohexenylen-, 1-Propenylen-, Allylen-, Butenylen- oder 4-Pentenylenrest; Alkinylenreste wie der Ethinylen- oder Propargylenrest; Arylenreste wie der Phenylen-, Bisphenylen-, Naphthylen-, Anthrylen- oder Phenanthrylenrest; Alkarylenreste wie o-, m-, p-Toluylenreste, Xylylenreste oder Ethylphenylenreste; oder Aralkylenreste wie der Benzylenrest, der 4,4'-Methylen-diphenylenrest, der α- oder der ß-Phenylethylenrest.

Vorzugsweise handelt es sich bei Rest Y um einen Kohlenwasserstoffrest mit 3 bis 13 Kohlenstoffatomen, besonders bevorzugt um lineare oder cyclische Alkylenreste.

Beispiele für Reste D sind die für Y angegebenen Beispiele, sowie Polyoxyalkylenreste, wie Polyoxyethylenreste oder Polyoxypropylenreste.

Vorzugsweise bedeutet D einen zweiwertigen, gegebenenfalls durch Fluoratome, Chloratome oder C₁-C₆-Alkylestergruppen substituierten Kohlenwasserstoffrest mit 1 bis 700 Kohlenstoffatomen oder einen Polyoxyalkylenrest. Im Fall von D gleich gegebenenfalls substituierten Kohlenwasserstoffrest handelt es sich bevorzugt um Alkylenreste mit 2 bis 12 Kohlenstoffatomen, insbesondere mit 4 bis 12 Kohlenstoffatomen. Im Fall von D gleich Polyoxyalkylenrest handelt es sich bevorzugt um solche mit 20 bis 800 Kohlenstoffatomen, besonders bevorzugt 20 bis 200 Kohlenstoffatomen, insbesondere 20 bis 100 Kohlenstoffatomen, wobei es sich ganz bevorzugt um Polyoxyethylenreste oder Polyoxypropylenreste handelt.

Index n bedeutet vorzugsweise eine Zahl von 99 bis 800, besonders bevorzugt 120 bis 300, insbesondere von 120 bis 200.

Vorzugsweise bedeutet a eine Zahl von 1 bis 1000, besonders bevorzugt von 3 bis 250, insbesondere von 5 bis 100.

Wenn b ungleich 0, bedeutet b vorzugsweise eine Zahl von 1 bis 250, insbesondere 1 bis 30. Bevorzugt ist b kleiner oder gleich der Summe aus a + c + e, dabei ist b besonders bevorzugt gleich 0.

Index c bedeutet vorzugsweise 0 oder eine Zahl von 1 bis 10, insbesondere 0 oder eine Zahl von 1 bis 5.

Vorzugsweise bedeutet d eine Zahl von 1 bis 30, besonders bevorzugt von 1 bis 20, insbesondere von 1 bis 10.

Die Organopolysiloxan/Polyharnstoff/Polyurethan-Blockcopolymere sind bereits bekannt und werden bevorzugt nach Verfahren gemäß dem Stand der Technik hergestellt, wie z.B. in EP-A 250248, EP-A 822951 oder DE-A 10137855 beschrieben, besonders bevorzugt wie in DE-A 10137855 beschrieben.

Als Endgruppen B in Formel (1) können übliche Endgruppen nach dem Stand der Technik vorkommen, die bei der Synthese solcher Polymere standardmäßig entstehen, wie beispielsweise Wasserstoff- oder Isocyanat-Endgruppen. Diese können während der Polymersynthese oder nachträglich noch mit weiteren Gruppen umgesetzt werden, wie beispielsweise mit aliphatischen Aminen, Alkoholen oder auch Amino- oder Isocyanato-Silanen. Weiterhin ist es möglich, bereits während der Synthese monofunktionelle organische Verbindungen hinzuzugeben, welche gegenüber Isocyanatgruppen reaktiv sind, wie z.B. primäre oder sekundäre Alkohole oder Amine, womit sich auf elegante Art und Weise zusätzlich die rheologischen Eigenschaften und das Molekulargewicht der Siloxan-Organo-Copolymere (B) steuern lassen.

Bevorzugte Beispiele für Endgruppen B sind neben Wasserstoffatom Strukturen der allgemeinen Formeln 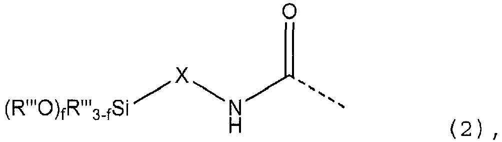 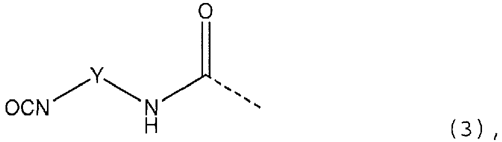 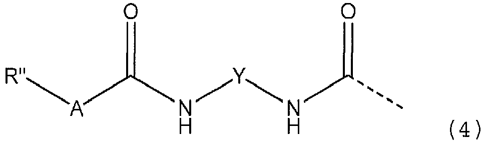 und 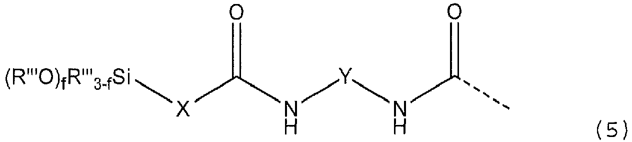 wobei
- **X**: gleich oder verschieden sein kann und einen Alkylen-Rest mit 1 bis 20 Kohlenstoffatomen, in dem einander nicht benachbarte Methyleneinheiten durch Gruppen -O- ersetzt sein können, bedeutet,
- **A**: gleich oder verschieden sein kann und Sauerstoffatom, Schwefelatom oder eine Aminogruppe -NR'- bedeutet,
- **R'**: gleich oder verschieden sein kann und Wasserstoffatom oder einen Alkylrest mit 1 bis 10 Kohlenstoffatomen bedeutet,
- **R"**: gleich oder verschieden sein kann und Wasserstoffatom oder einen Alkylrest mit 1 bis 20 Kohlenstoffatomen bedeutet,
- **Y**: gleich oder verschieden sein kann und einen zweiwertigen, gegebenenfalls durch Fluor oder Chlor substituierten Kohlenwasserstoffrest mit 1 bis 20 Kohlenstoffatomen bedeutet,
- **R'"**: gleich oder verschieden sein kann und einen Alkylrest mit 1 bis 20 Kohlenstoffatomen bedeutet und
- **f**: 0, 1, 2 oder 3 ist.

Beispiele für Rest R" sind Wasserstoffatom sowie die oben für Rest R angegebenen Beispiele.

Vorzugsweise handelt es sich bei Rest R" um einen Alkylrest mit 3 bis 12 Kohlenstoffatomen.

Beispiele für Rest R'" sind die oben für Rest R angegebenen Beispiele.

Vorzugsweise handelt es sich bei Rest R'" um einen Alkylrest mit 1 bis 4 Kohlenstoffatomen, besonders bevorzugt um den Methyl- oder Ethylrest.

Besonders bevorzugt handelt es sich bei den Endgruppen B um Harnstoffgruppen der allgemeinen Formel (3), der allgemeinen Formel (4) oder der allgemeinen Formel (5).

Bei der erfindungsgemäß eingesetzten Komponente (B) beträgt der Gehalt an Siloxan-Einheiten bevorzugt zwischen 80 und 99,5 Gew.-%, besonders bevorzugt zwischen 90 und 99 Gew.-%, ganz besonders bevorzugt zwischen 95 und 99 Gew.-%.

Beispiele für Siloxan-Organo-Copolymere (B) sind
(C₂H₅O)₃-Si-C₃H₆-NH-CO-[NH-(CH₂)₃-Si(CH₃)₂-(O-Si(CH₃)₂)₁₃₀₋₁₆₀-(CH₂)₃-NH-CO-NH-p-C₆H₁₀-CH₂-p-C₆H₁₀-NH-CO]₁₅₋₂₅-NH(CH₂)₃SiMe₂(OSiMe₂)₁₃₀₋₁₆₀-(CH₂)₃-NH-CO-NH-C₃H₆-Si(OC₂H₅)₃,
(H₃CO)₃-Si-C₃H₆-NH-CO-[NH-(CH₂)₃-Si(CH₃)₂-(O-Si(CH₃)₂)₁₃₀₋₁₆₀-(CH₂)₃-NH-CO-NH-p-C₆H₁₀-CH₂-p-C₆H₁₀-NH-CO]₁₅₋₂₅-NH(CH₂)₃SiMe₂(OSiMe₂)₁₃₀₋₁₆₀ (CH₂)₃-NH-CO-NH-C₃H₆-Si(OCH₃)₃,
(C₂H₅O)₃-Si-CH₂-NH-CO-[NH-(CH₂)₃-Si(CH₃)₂-(O-Si(CH₃)₂)₁₃₀₋₁₆₀-(CH₂)₃-NH-CO-NH-p-C₆H₁₀-CH₂-p-C₆H₁₀-NH-CO]₁₅₋₂₅-NH(CH₂)₃SiMe₂(OSiMe₂)₁₃₀₋₁₆₀-(CH₂)₃-NH-CO-NH-CH₂-Si(OC₂H₅)₃,
(H₅C₂O)₃-Si-C₃H₆-NH-CO-NH-p-C₆H₁₀-CH₂-p-C₆H₁₀-NH-CO-[NH-(CH₂)₃-Si (CH₃)₂-(O-Si(CH₃)₂)₁₃₀₋₁₆₀-(CH₂)₃-NH-CO-NH-p-C₆H₁₀-CH₂-p-C₆H₁₀-NH-CO]₁₅₋₂₅-[NH-(CH₂)₃-Si(CH₃)₂-(O-Si(CH₃)₂)₁₃₀₋₁₆₀-(CH₂)₃-NH-CO-NH-p-C₆H₁₀-CH₂-p-C₆H₁₀-NH]-CO-NH-C₃H₆-Si(OC₂H₅)₃,
(H₅C₂O)₃-Si-CH₂-NH-CO-NH-p-C₆H₁₀-CH₂-p-C₆H₁₀-NH-CO-[NH-(CH₂)₃-Si(CH₃)₂-(O-Si(CH₃)₂)₁₃₀₋₁₆₀-(CH₂)₃-NH-CO-NH-p-C₆H₁₀-CH₂-ₚ-C₆H₁₀-NH-CO]₁₅₋₂₅-[NH-(CH₂)₃-Si(CH₃)₂-(O-Si(CH₃)₂)₁₃₀₋₁₆₀-(CH₂)₃-NH-CO-NH-p-C₆H₁₀-CH₂-p-C₆H₁₀-NH]-CO-NH-CH₂-Si(OC₂H₅)₃,
(H₃CO)₃-Si-C₃H₆-NH-CO-NH-p-C₆H₁₀-CH₂-p-C₆H₁₀-NH-CO- [NH-(CH₂)₃-Si(CH₃)₂-(O-Si(CH₃)₂)₁₃₀₋₁₆₀-(CH₂)₃-NH-CO-NH-p-C₆H₁₀-CH₂-ₚ-C₆H₁₀-NH-CO]₁₅₋₂₅-[NH-(CH₂)₃-Si(CH₃)₂-(O-Si(CH₃)₂)₁₃₀₋₁₆₀-(CH₂)₃-NH-CO-NH-p-C₆H₁₀-CH₂-p-C₆H₁₀-NH] -CO-NH-C₃H₆-Si(OCH₃)₃,
H₃C(H₃CO)₂-Si-C₃H₆-NH-CO-NH-p-C₆H₁₀-CH₂-p-C₆H₁₀-NH-CO-[NH-(CH₂)₃-Si(CH₃)₂-(O-Si(CH₃)₂)₁₃₀₋₁₆₀-(CH₂)₃-NH-CO-NH-p-C₆H₁₀-CH₂-p-C₆H₁₀-NH-CO]₁₅₋₂₅-[NH-(CH₂)₃-Si(CH₃)₂-(O-Si(CH₃)₂)₁₃₀₋₁₆₀-(CH₂)₃-NH-CO-NH-p-C₆H₁₀-CH₂-p-C₆H₁₀-NH]-CO-NH-C₃H₆-Si(OCH₃)₂CH₃,
n-C₄H₉-NH-CO-NH-p-C₆H₁₀-CH₂-p-C₆H₁₀-NH-CO-[NH-(CH₂)₃-Si(CH₃)₂-(O-Si(CH₃)₂)₁₃₀₋₁₆₀-(CH₂)₃-NH-CO-NH-p-C₆H₁₀-CH₂-p-C₆H₁₀-NH-CO]₁₅₋₂₅-[NH-(CH₂)₃-Si(CH₃)₂-(O-Si(CH₃)₂)₁₃₀₋₁₆₀-(CH₂)₃-NH-CO-NH-p-C₆H₁₀-CH₂-p-C₆H₁₀-NCO,
n-C₄H₉-NH-CO-NH-p-C₆H₁₀-CH₂-p-C₆H₁₀-NH-CO-[NH-(CH₂)₃-Si(CH₃)₂-(O-Si(CH₃)₂)₁₃₀₋₁₆₀-(CH₂)₃-NH-CO-NH-p-C₆H₁₀-CH₂-p-C₆H₁₀-NH-CO]₁₅₋₂₅-[NH-(CH₂)₃-Si(CH₃)₂-(O-Si(CH₃)₂)₁₃₀₋₁₆₀-(CH₂)₃-NH-CO-NH-p-C₆H₁₀-CH₂-p-C₆H₁₀-NH-CO-NH-n-C₄H₉
(C₂H₅O)₃-Si-C₃H₆-NH-CO-[NH-(CH₂)₃-Si(CH₃)₂-(O-Si(CH₃)₂)₁₃₀₋₁₆₀-(CH₂)₃-NH-CO-NH-C₁₀H₁₈-NH-CO]₂₅₋₃₅-NH(CH₂)₃SiMe₂(OSiMe₂)₁₃₀₋₁₆₀(CH₂)₃-NH-CO-NH-C₃H₆-Si(OC₂H₅)₃,
(C₂H₅O)₃-Si-CH₂-NH-CO-[NH-(CH₂)₃-Si(CH₃)₂-(O-Si(CH₃)₂)₁₃₀₋₁₆₀-(CH₂)₃-NH-CO-NH-C₁₀H₁₈-NH-CO]₂₅₋₃₅-NH(CH₂)₃SiMe₂(OSiMe₂)₁₃₀₋₁₆₀(CH₂)₃-NH-CO-NH-CH₂-Si(OC₂H₅)₃,
(H₃CO)₃-Si-C₃H₆-NH-CO-[NH-(CH₂)₃-Si(CH₃)₂-(O-Si(CH₃)₂)₁₃₀₋₁₆₀-(CH₂)₃-NH-CO-NH-C₁₀H₁₈-NH-CO]₂₅₋₃₅-NH(CH₂)₃SiMe₂(OSiMe₂)₁₃₀₋₁₆₀(CH₂)₃-NH-CO-NH-C₃H₆-Si(OCH₃)₃,
(H₃CO)₃-Si-C₃H₆-NH-CO-[NH-(CH₂)₃-Si(CH₃)₂-(O-Si(CH₃)₂)₁₃₀₋₁₆₀-(CH₂)₃-NH-CO-NH-C₁₀H₁₈-NH-CO]₁₀₋₁₅-[NH-C₆H₁₂-NH-CO-NH-C₁₀H₁₈-NH-CO]₅-NH(CH₂)₃SiMe₂(OSiMe₂)₁₃₀₋₁₆₀-(CH₂)₃-NH-CO-NH-C₃H₆-Si(OCH₃)₃,
(H₃CO)₃-Si-C₃H₆-NH-CO-NH-C₁₀H₁₈-NH-CO-[NH-(CH₂)₃-Si(CH₃)₂-(O-Si(CH₃)₂)₁₃₀₋₁₆₀-(CH₂)₃-NH-CO-NH-C₁₀H₁₈-NH-CO]₁₀₋₁₅[NH-(CH₂)₃-Si(CH₃)₂-(O-Si(CH₃)₂)₁₃₀₋₁₆₀-(CH₂)₃-NH-CO-NH-C₁₀H₁₈-NH]-CO-NH-C₃H₆-Si(OCH₃)₃, H₃C(H₃CO)₂-Si-C₃H₆-NH-CO-NH-C₁₀H₁₈-NH-CO-[NH-(CH₂)₃-Si(CH₃)₂-(O-Si(CH₃)₂)₁₃₀₋₁₆₀-(CH₂)₃-NH-CO-NH-C₁₀H₁₈-NH-CO]₂₅₋₃₅-NH-(CH₂)₃-Si(CH₃)₂-(O-Si(CH₃)₂)₁₃₀₋₁₆₀-(CH₂)₃-NH-CO-NH-C₁₀H₁₈-NH-CO-NH-C₃H₆-Si(OCH₃)₂CH₃,
(H₅C₂O)₃-Si-C₃H₆-NH-CO-NH-C₁₀H₁₈-NH-CO-[NH-(CH₂)₃-Si(CH₃)₂-(O-Si(CH₃)₂)₁₃₀₋₁₆₀-(CH₂)₃-NH-CO-NH-C₁₀H₁₈-NH-CO]₂₅₋₃₅-NH-(CH₂)₃-Si(CH₃)₂-(O-Si(CH₃)₂)₁₃₀₋₁₆₀-(CH₂)₃-NH-CO-NH-C₁₀H₁₈-NH-CO-NH-C₃H₆-Si(OC₂H₅)₃,
(C₂H₅O)₃-Si-C₃H₆-NH-CO-[NH-(CH₂)₃-Si(CH₃)₂-(O-Si(CH₃)₂)₁₃₀₋₁₆₀-(CH₂)₃-NH-CO-NH-C₆H₁₂-NH-CO]₂₅₋₃₅-NH(CH₂)₃SiMe₂(OSiMe₂)₁₃₀₋₁₆₀ (CH₂)₃-NH-CO-NH-C₃H₆-Si(OC₂H₅)₃,
(C₂H₅O)₃-Si-CH₂-NH-CO-[NH-(CH₂)₃-Si(CH₃)₂-(O-Si(CH₃)₂)₁₃₀₋₁₆₀-(CH₂)₃-NH-CO-NH-C₆H₁₂-NH-CO]₂₅₋₃₅-NH(CH₂)₃SiMe₂(OSiMe₂)₁₃₀₋₁₆₀(CH₂)₃-NH-CO-NH-CH₂-Si(OC₂H₅)₃,
(H₃CO)₃-Si-C₃H₆-NH-CO-[NH-(CH₂)₃-Si(CH₃)₂-(O-Si(CH₃)₂)₁₃₀₋₁₆₀-(CH₂)₃-NH-CO-NH-C₆H₁₂-NH-CO]₂₅₋₃₅-NH(CH₂)₃SiMe₂(OSiMe₂)₁₃₀₋₁₆₀(CH₂)₃-NH-CO-NH-C₃H₆-Si(OCH₃)₃,
(H₃CO)₃-Si-C₃H₆-NH-CO-NH-C₆H₁₂-NH-CO-[NH-(CH₂)₃-Si(CH₃)₂-(O-Si(CH₃)₂)₁₃₀₋₁₆₀-(CH₂)₃-NH-CO-NH-C₆H₁₂-NH-CO]₂₅₋₃₅-NH-(CH₂)₃-Si(CH₃)₂-(O-Si(CH₃)₂)₁₃₀₋₁₆₀-(CH₂)₃-NH-CO-NH-C₆H₁₂-NH-CO-NH-C₃H₆-Si(OCH₃)₃,
H₃C(H₃CO)₂-Si-C₃H₆-NH-CO-NH-C₆H₁₂-NH-CO-[NH-(CH₂)₃-Si(CH₃)₂-(O-Si(CH₃)₂)₁₃₀₋₁₆₀-(CH₂)₃-NH-CO-NH-C₆H₁₂-NH-CO]₂₅₋₃₅-NH-(CH₂)₃-Si(CH₃)₂-(O-Si(CH₃)₂)₁₃₀₋₁₆₀-(CH₂)₃-NH-CO-NH-C₆H₁₂-NH-CO-NH-C₃H₆-Si(OCH₃)₂CH₃,
(H₅C₂O)₃-Si-C₃H₆-NH-CO-NH-C₆H₁₂-NH-CO-[NH-(CH₂)₃-Si(CH₃)₂-(O-Si(CH₃)₂)₁₃₀₋₁₆₀-(CH₂)₃-NH-CO-NH-C₆H₁₂-NH-CO]₂₅₋₃₅-NH-(CH₂)₃-Si(CH₃)₂-(O-Si(CH₃)₂)₁₃₀₋₁₆₀-(CH₂)₃-NH-CO-NH-C₆H₁₂-NH-CO-NH-C₃H₆-Si(OC₂H₅)₃,
(C₂H₅O)₃-Si-C₃H₆-NH-CO-[NH-(CH₂)₃-Si(CH₃)₂-(O-Si(CH₃)₂)₁₈₀₋₂₂₀-(CH₂)₃-NH-CO-NH-p-C₆H₁₀-CH₂-p-C₆H₁₀-NH-CO]₁₀₋₂₀-NH(CH₂)₃SiMe₂(OSiMe₂)₁₈₀₋₂₂₀-CH₂)₃-NH-CO-NH-C₃H₆-Si(OC₂H₅)₃,
(C₂H₅O)₃-Si-CH₂-NH-CO-[NH-(CH₂)₃-Si(CH₃)₂-(O-Si(CH₃)₂)₁₈₀₋₂₂₀-(CH₂)₃-NH-CO-NH-p-C₆H₁₀-CH₂-p-C₆H₁₀-NH-CO]₈₋₂₀-NH(CH₂)₃SiMe₂(OSiMe₂)₁₈₀₋₂₂₀(CH₂)₃-NH-CO-NH-CH₂-Si(OC₂H₅)₃,
(C₂H₅O)₃-Si-C₃H₆-NH-CO-[NH-(CH₂)₃-Si(CH₃)₂-(O-Si(CH₃)₂)₁₈₀₋₂₂₀-(CH₂)₃-NH-CO-NH-p-C₆H₁₀-CH₂-p-C₆H₁₀-NH-CO]₈₋₂₀-[NH-CH₂-CH₂-NH-CO-NH-p-C₆H₁₀-CH₂-p-C₆H₁₀-NH-CO]₃₋₈-NH(CH₂)₃SiMe₂(OSiMe₂)₁₈₀₋₂₂₀(CH₂)₃-NH-CO-NH-C₃H₆-Si(OC₂H₅)₃,
(C₂H₅O)₃-Si-CH₂-NH-CO-[NH-(CH₂)₃-Si(CH₃)₂-(O-Si(CH₃)₂)₁₈₀₋₂₂₀-(CH₂)₃-NH-CO-NH-p-C₆H₁₀-CH₂-p-C₆H₁₀-NH-CO]₈₋₂₀-[NH-CH₂-CH₂-NH-CO-NH-p-C₆H₁₀-CH₂-p-C₆H₁₀-NH-CO]₃₋₈-NH (CH₂)₃SiMe₂(OSiMe₂)₁₈₀₋₂₂₀ (CH₂)₃-NH-CO-NH-CH₂-Si(OC₂H₅)₃,
n-C₄H₉-NH-CO-NH-p-C₆H₁₀-CH₂-p-C₆H₁₀-NH-CO-[NH-(CH₂)₃-Si(CH₃)₂-(O-Si(CH₃)₂)₁₈₀₋₂₂₀-(CH₂)₃-NH-CO-NH-p-C₆H₁₀-CH₂-p-C₆H₁₀-NH-CO]₈₋₂₀-NH-n-C₄H₉,
n-C₄H₉-NH-CO-NH-p-C₆H₁₀-CH₂-p-C₆H₁₀-NH-CO-[NH-(CH₂)₃-Si(CH₃)₂-(O-Si(CH₃)₂)₂₅₀₋₂₈₀-(CH₂)₃-NH-CO-NH-p-C₆H₁₀-CH₂-p-C₆H₁₀-NH-CO]₆₋₁₅-NH-n-C₄H₉
n-C₄H₉-NH-CO-NH-C₁₀H₁₈-NH-CO-[NH-(CH₂)₃-Si(CH₃)₂-(O-Si(CH₃)₂)₁₈₀₋₂₂₀-(CH₂)₃-NH-CO-NH-C₁₀H₁₈-NH-CO]₈₋₂₀-NH-n-C₄H₉,
n-C₄H₉-NH-CO-NH-C₆H₁₂-NH-CO-[NH-(CH₂)₃-Si(CH₃)₂-(O-Si(CH₃)₂)₁₈₀₋₂₂₀-(CH₂)₃-NH-CO-NH-C₆H₁₂-NH-CO]₈₋₂₀-NH-n-C₄H₉,
n-C₄H₉-NH-CO-NH-p-C₆H₁₀-CH₂-p-C₆H₁₀-NH-CO-[NH-(CH₂)₃-Si(CH₃)₂-(O-Si(CH₃)₂)₁₈₀₋₂₂₀-(CH₂)₃-NH-CO-NH-p-C₆H₁₀-CH₂-ₚ-C₆H₁0-NH-CO]₈₋₂₀-[NH-(CH₂)₃-Si(CH₃)₂-(O-Si(CH₃)₂)₁₈₀₋₂₂₀-(CH₂)₃-NH-CO-NH-C₁₀H₁₈-NH-CO]₄₋₁₀ NH-n-C₄H₉,
n-C₄H₃-NH-CO-NH-p-C₆H₁₀-CH₂-p-C₆H₁₀-NH-CO-[NH-(CH₂)₃-Si(CH₃)₂-(O-Si(CH₃)₂)₁₈₀₋₂₂₀-(CH₂)₃-NH-CO-NH-p-C₆H₁₀-CH₂-p-C₆H₁₀-NH-CO]₈₋₂₀-NH-(CH₂)₃-Si(CH₃)₂-(O-Si(CH₃)₂)₁₈₀₋₂₂₀-(CH₂)₃-NH₂,
n-C₄H₉-NH-CO-NH-C₁₀H₁₈-NH-CO-[NH-(CH₂)₃-Si(CH₃)₂-(O-Si(CH₃)₂)₁₈₀₋₂₂₀-(CH₂)₃-NH-CO-NH-C₁₀H₁₈-NH-CO]₈₋₂₀-NH-(CH₂)₃-Si(CH₃)₂-(O-Si(CH₃)₂)₁₈₀₋₂₂₀- (CH₂)₃-NH₂,
n-C₄H₉-NH-CO-NH-C₁₀H₁₈-NH-CO-[NH-(CH₂)₃-Si(CH₃)₂-(O-Si(CH₃)₂)₂₅₀₋₂₈₀-(CH₂)₃-NH-CO-NH-C₁₀H₁₈-NH-CO]₈₋₂₀-NH-(CH₂)₃-Si(CH₃)₂-(O-Si(CH₃)₂)₂₅₀₋₂₈₀-(CH₂)₃-NH₂,
H-[NH-(CH₂)₃-Si(CH₃)₂-(O-Si(CH₃)₂)₁₈₀₋₂₂₀-(CH₂)₃-NH-CO-NH-p-C₆H₁₀-CH₂-p-C₆H₁₀-NH-CO]₈₋₂₀-[NH-(CH₂)₃-Si(CH₃)₂-(O-Si(CH₃)₂)₁₈₀₋₂₂₀-(CH₂)₃-NH₂,
H[NH-(CH₂)₃-Si(CH₃)₂-(O-Si(CH₃)₂)₁₈₀₋₂₂₀-(CH₂)₃-NH-CO-NH-C₆H₁₂-NH-CO]₈₋₂₀-NH-(CH₂)₃-Si(CH₃)₂-(O-Si(CH₃)₂)₁₈₀₋₂₂₀-(CH₂)₃-NH₂ und
n-C₄H₉-NH-CO-NH-p-C₆H₁₀-CH₂-p-C₆H₁₀-NH-CO-[NH-(CH₂)₃-Si(CH₃)₂-(O-Si(CH₃)₂)₁₈₀₋₂₂₀-(CH₂)₃-NH-CO-NH-p-C₆H₁₀CH₂-p-C₆H₁₀NH-CO]₈₋₂₀-[NH-(CH₂)₃-Si(CH₃)₂-(O-Si(CH₃)₂)₁₈₀₋₂₂₀-(CH₂)₃-NH-CO-NH-C₁₀H₁₈-NH-CO]₄₋₁₀ NH-(CH₂)₃-Si(CH₃)₂-(O-Si(CH₃)₂)₁₈₀₋₂₂₀-(CH₂)₃-NH₂.
n-C₄H₉-NH-CO-NH-p-C₆H₁₀-CH₂-p-C₆H₁₀-NH-CO-[NH-(CH₂)₃-Si(CH₃)₂-(O-Si(CH₃)₂)₂₅₀₋₂₈₀-(CH₂)₃-NH-CO-NH-p-C₆H₁₀-CH₂-p-C₆H₁₀-NH-CO]₁₀₋₁₅-[NH-(CH₂)₃-Si(CH₃)₂-(O-Si(CH₃)₂)₂₅₀₋₂₈₀-(CH₂)₃-NH-CO-NH-C₁₀H₁₈-NH-CO]₄₋₁₀ NH-(CH₂)₃-Si(CH₃)₂-(O-Si(CH₃)₂)₂₅₀₋₂₈₀-(CH₂)₃-NH₂.

Insbesondere handelt es sich bei Komponente (B) um Copolymere der Formel (1) mit R = -CH₃, X = -C₃H₆-, A = -NH- oder -O-, bevorzugt jedoch -NH-, Z = -NH- oder -O-, bevorzugt jedoch -NH-, R' = Wasserstoffatom, Y = -C₆H₁₀-CH₂-C₆H₁₀- oder -C₁₀H₁₈-, D = -C₂H₄- oder -C₆H₁₂-, B = Rest der Formel 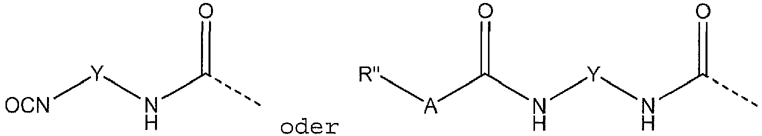 mit R" = -C₄H₉ oder -C₁₂H₂₅ und n = eine Zahl von 120 bis 300, a = eine Zahl von 5 bis 100, b = 0, 1 oder 2, c = 0 oder 1, bevorzugt jedoch 0, d = mindestens 1 sowie e = 0 oder 1.

Die erfindungsgemäß eingesetzten Copolymere (B) haben eine Shore A Härte von bevorzugt unter 50, besonders bevorzugt unter 40 und ganz besonders bevorzugt unter 30. Die erfindungsgemäß eingesetzten Copolymere (B) haben eine Shore A Härte von bevorzugt mindestens 5.

Die Shore A Härte wird dabei bestimmt gemäß DIN EN 53505.

Das durchschnittliche Molekulargewicht Mₙ (Zahlenmittel) von Komponente (B) beträgt bevorzugt mindestens 50 000 g/mol, besonders bevorzugt mindestens 100 000 g/mol. Die erfindungsgemäß eingesetzten Copolymere (B) haben bevorzugt ein durchschnittliches Molekulargewicht Mₙ von maximal 1 000 000 g/mol.

Die zahlenmittlere Molmasse Mₙ wird dabei im Rahmen der vorliegenden Erfindung mittels Size Exclusion Chromatography (SEC) gegen Polystyrol-Standard, in THF, bei 45°C, Flow Rate 1,0 ml/min und Detektion mit ELSD (verdampfender Lichtstreu-Detektor) auf einem Säulenset dreimal PLGel MixC Säulen von Agilent Technologies mit einem Injektionsvolumen von 100 µL nach Acetylierung mit Essigsäureanhydrid bestimmt.

Die erfindungsgemäß eingesetzten Siloxan-Organo-Copolymere (B) sind bei 25°C und 1000 hPa bevorzugt fest.

Die erfindungsgemäß eingesetzten Siloxan-Organo-Copolymere (B) haben bei 1000 hPa einen Erweichungsbereich von bevorzugt größer oder gleich 50°C, besonders bevorzugt oberhalb von 80°C, insbesondere oberhalb von 120°C und ganz besonders bevorzugt von 140 bis 220°C.

Dabei wird im Rahmen dieser Erfindung der Erweichungsbereich definiert als der Temperaturbereich (bei Scherraten von 0,1 1/s bis 1000 1/s), bei dem der Verlustfaktor (G"/G') gemäß ISO 6721-10 den Wert von 1 einnimmt.

Im Rahmen der vorliegenden Erfindung umfasst der Begriff "Polymer" Homopolymere, Copolymere oder Terpolymere.

Die erfindungsgemäß eingesetzten Polyamidpolymere (A) sind bevorzugt frei von Si-Atomen.

Bei den erfindungsgemäß eingesetzten Polyamidpolymeren (A) kann es sich um Homopolyamide oder Copolyamide handeln, wobei Copolyamide bevorzugt sind.

Polyamidpolymere sind an sich bereits bekannt und lassen sich bezüglich ihrer Monomerzusammensetzung in Homopolyamide und Copolyamide unterteilen.

Homopolyamide (A) leiten sich von einer Aminocarbonsäure oder einem Lactam bzw. einem Diamin und einer Dicarbonsäure ab. Solche Polyamide lassen sich durch eine einzige beschreiben. Beispiele hierfür sind das Polyamid aus Caprolactam [NH-(CH₂)₅-CO]ₙ (PA 6) oder das Polyamid aus Hexamethylendiamin und Adipinsäure [NH-(CH₂)₆-NH-CO-(CH₂)₄-CO]ₙ (PA 6.6) oder z.B. das Polyamid aus Laurinlactam oder ω-Aminododecansäure (PA 12).

Copolyamide (A) leiten sich von mehreren unterschiedlichen Monomeren ab. Solche Polyamide lassen sich nur durch Angabe mehrerer Wiederholeinheiten beschreiben. Beispiele hierfür sind das Polyamid aus Caprolactam, Hexamethylendiamin und Adipinsäure [NH-(CH₂)₆-NH-CO-(CH₂)₄-CO]ₙ-[NH-(CH₂)₅-CO]ₘ (PA 6/66), oder Polyamide aus Hexamethylendiamin, Adipinsäure und Sebacinsäure [NH-(CH₂)₆-NH-CO-(CH₂)₄-CO]ₙ-[NH-(CH₂)₆-NH-CO-(CH₂)₈-CO]ₘ (PA 66/610). Zu beachten ist, dass die angegebenen Formeln lediglich die Polymerzusammensetzung beschreiben, nicht aber die Abfolge der Monomereinheiten; diese sind üblicherweise statistisch über die Polymerketten verteilt.

Als weitere Bausteine zur Herstellung von Copolyamiden (A) kommen zusätzliche organische Dicarbonsäuren, Polyetherdiole, Polesterdiole, Polyetherdiamine in Frage. Je nach den zusätzlichen Bausteinen kann handelt es dann bei den Copolyamiden um Polyetheresteramide, Polyetheramide, Polyesteramide etc. Diese sind u.a. in US-A 4,331 786, US-A 411,575, US-A 4,195,015, US-A 4,839,441, US-A 4,864,014, US-A 4,230,838 oder der US-A 4,332,920 offenbart.

Die Polyamidpolymere (A) sind bevorzugt thermoplastisch, d.h. die Produkte sind bei 25°C und 1000 hPa fest und lassen sich in einem bestimmten Temperaturbereich oberhalb von 25°C bei 1000 hPa reversibel verformen.

Bevorzugt werden als Komponente (A) Polyamide mit einem Erweichungspunkt bei einem Druck von 1000 hPa zwischen 150 und 300 °C, besonders bevorzugt mit einem Erweichungspunkt zwischen 160 und 230 °C, ganz besonders bevorzugt zwischen 160 und 210 °C verwendet. Solche Copolyamide sind u.a. in US-A 4,483,975, DE-A 3730504 und US-A 5,459,230 offenbart.

Bevorzugt weisen die erfindungsgemäß eingesetzten Polyamidpolymere (A) elastomere Weichsegmente auf. Falls Komponente (A) elastomere Weichsegmente aufweist, liegt deren Anteil bevorzugt zwischen 5 und 85 Gew.-%, besonders bevorzugt zwischen 20 und 60 Gew. %. Solche Copolyamide sind u.a. in der US-A 6,916,517 beschrieben.

Bei den gegebenenfalls in Komponente (A) enthaltenen elastomeren Weichsegmenten handelt es sich bevorzugt um Polyetherblöcke, besonders bevorzugt um Polyetherblöcke auf Basis Polytetramethylenglykol.

Die bevorzugt verwendeten elastomeren Weichsegmente sind bevorzugt über Ester- oder Amidgruppen im Copolyamid eingebaut.

Die verwendeten Polyamide haben bevorzugt einen Zugmodul von unter 5000 MPa, besonders bevorzugt von unter 1000 MPa, ganz besonders bevorzugt von unter 200 MPa (jeweils bestimmt mittels ISO 527 an für 14 Tagen bei 25 °C und 50 % relative Feuchte konditionierten Proben).

Dabei wird das thermoplastische Verhalten eines Copolyamides, welches elastomere Weichsegmente enthält, im Wesentlichen durch den Polyamid-Teil bestimmt, und die elastomeren Eigenschaften dieses Copolyamides werden durch den Polyether-Teil bestimmt. Solche Copolyamide werden vom Fachmann im Allgemeinen als PAE, TPE-A, TPA oder PEBA (Polyether-Blockamide) bezeichnet bzw. abgekürzt.

Verfahren zur Herstellung der erfindungsgemäß eingesetzten thermoplastischen Copolyamide (A) sind wohlbekannt.

Deren Herstellung und Verwendung sowie die zur Herstellung von Copolyamiden verwendeten Rohstoffe und Zusammensetzungen werden u.a. in Ullmann's Encyclopedia of Industrial Chemistry unter dem Kapitel "Thermoplastic Polyamide Elastomers" beschrieben.

Bevorzugte Beispiele für als Komponente (A) erfindungsgemäß eingesetzte TPE-As umfassen auf Polyamid 12 basierendes TPE-A wie z.B. diverse PEBAX - Typen (Arkema SA, Colombes, FR) oder Vestamid E Typen (Evonik AG, Essen, DE).

Besonders bevorzugt handelt es sich bei der erfindungsgemäß eingesetzten Komponente (A) um Polyether basierende TPE-As auf Basis Polyamid 12 und Polytetramethylenglykol, wie z.B. PEBAX® 2533, PEBAX® 3533, PEBAX® 4033, PEBAX® 5533 und PEBAX® MX 1205 (käuflich erhältlich bei Arkema SA, Colombes, FR).

Bevorzugt ist die verwendete Komponente (A) farblos.

Erfindungsgemäß eingesetzte Polyamide (A) haben bevorzugt eine Shore A Härte von maximal 90, besonders bevorzugt von unter 80 und ganz besonders bevorzugt von maximal 70. Polyamide (A) haben bevorzugt eine Shore A Härte von mindestens 40.

Erfindungsgemäß eingesetzte Polyamide (A) haben bevorzugt eine Reißfestigkeit von größer 15 MPa, besonders bevorzugt von größer 20 MPa und ganz besonders bevorzugt von größer 25 MPa. Polyamide (A) haben eine Reißfestigkeit von maximal 70 MPa.

Die Reißdehnung der bevorzugt verwendeten Copolyamide (A) hat bevorzugt einen Wert größer als 300 %, besonders bevorzugt einen Wert größer 500 % ganz besonders bevorzugt einen Wert größer 700 %, maximal jedoch eine Reißdehnung von 1500 %.

Die erfindungsgemäß eingesetzten Polyamide (A) sind bei 25°C und 1000 hPa bevorzugt fest.

Polyamide (A) werden erfindungsgemäß bevorzugt in Pellet-Form eingesetzt.

Zusätzlich zu den Komponenten (A) und (B) können die erfindungsgemäßen Polymerzusammensetzungen weitere Stoffe enthalten, die unterschiedlich sind zu den Komponenten (A) und (B), wie z.B. Polymere vom Nicht-Polyamidtyp (A'), organische oder anorganische Füllstoffe (C), anorganische Fasern (D), Flammschutzmittel (E), Biozide (F), Pigmente (G), UV-Absorber (H) und HALS-Stabilisatoren (I).

Gegebenenfalls eingesetzte Polymere (A') sind bevorzugt thermoplastisch, d.h. die Produkte sind bei 25°C und 1000 hPa fest und lassen sich in einem bestimmten Temperaturbereich oberhalb von 25°C bei 1000 hPa reversibel verformen.

Bevorzugte Beispiele für gegebenenfalls eingesetztes thermoplastisches Polymer (A') sind Polyurethane, Polyester, Polyacrylate, Polyolefine, funktionelle Polyolefine, Polystyrole oder PVC, wobei es sich besonders bevorzugt um Polyurethane oder Polyester handelt.

Falls Polymere (A') eingesetzt werden, handelt es sich um Mengen von bevorzugt 1 bis 40 Gewichtsteile, besonders bevorzugt 5 bis 30 Gewichtsteile, jeweils bezogen auf 100 Gewichtsteile Komponente (A). Die erfindungsgemäßen Zusammensetzungen enthalten bevorzugt keine Polymere (A').

Bevorzugt handelt es sich bei den erfindungsgemäß gegebenenfalls eingesetzten Füllstoffen (C) um anorganische Füllstoffe, besonders bevorzugt um Quarz, Talk, Calciumcarbonat, Kieselgur oder Calciumsilikat oder Kieselsäuren.

Bevorzugte Beispiele für erfindungsgemäß gegebenenfalls eingesetzte anorganische Fasern (D) sind Glasfasern, Basaltfasern oder Wollastonit, wobei Glasfasern bevorzugt sind.

Falls anorganische Fasern (D) eingesetzt werden, handelt es sich um Mengen von bevorzugt 1 bis 30 Gew.-%, besonders bevorzugt 5 bis 15 Gew.-%. Die erfindungsgemäßen Polymerzusammensetzungen enthalten bevorzugt keine Komponente (D).

Bevorzugte Beispiele für erfindungsgemäß gegebenenfalls eingesetzte Flammschutzmittel (E) sind organische Flammschutzmittel auf Basis halogenierter organischer Verbindungen oder anorganische Flammschutzmittel z.B. Aluminiumhydroxid (ATH) oder Magnesiumhydroxid.

Falls Flammschutzmittel (E) eingesetzt werden, sind anorganische Flammschutzmittel wie ATH bevorzugt.

Bevorzugte Beispiele für erfindungsgemäß gegebenenfalls eingesetzte Biozide (F) sind anorganische Fungizide, wie Borate wie z.B. Zinkborat, oder organische Fungizide wie z.B. Thiabendazol.

Bevorzugte Beispiele für erfindungsgemäß gegebenenfalls eingesetzte Pigmente (G) sind organische Pigmente oder anorganische Pigmente wie z.B. Eisenoxide oder Titandioxid.

Falls Pigmente (G) eingesetzt werden, handelt es sich um Mengen von bevorzugt 0,2 bis 7 Gew.-%, besonders bevorzugt 0,5 bis 3 Gew.-%. Bevorzugt werden Pigmente (G) eingesetzt.

Beispiele für erfindungsgemäß gegebenenfalls eingesetzte UV-Absorber (H) sind Benzophenone, Benzotriazole oder Triazine. Falls UV-Absorber (H) eingesetzt werden, sind Benzotriazole und Triazine bevorzugt.

Bevorzugte Beispiele für erfindungsgemäß gegebenenfalls eingesetzte HALS-Stabilisatoren (I) sind z.B. Piperidin oder Piperidyl-Derivate und sind u.a. unter dem Markennamen Tinuvin (BASF SE, D-Ludwigshafen) erhältlich.

Zur Herstellung der erfindungsgemäßen Zusammensetzungen werden über die Komponenten (A), (B), gegebenenfalls (A') sowie gegebenenfalls (C) bis (I) bevorzugt keine weiteren Bestandteile eingesetzt.

Bei den einzelnen Bestandteilen der erfindungsgemäßen Zusammensetzung kann es sich jeweils um eine Art eines solchen Bestandteils wie auch um ein Gemisch aus mindestens zwei verschiedenen Arten derartiger Bestandteile handeln.

Die erfindungsgemäßen Polymerzusammensetzungen haben bevorzugt sowohl thermoplastische als auch elastomere Eigenschaften.

So beträgt die Reißdehnung der erfindungsgemäßen Polymerzusammensetzungen bevorzugt mindestens 200 %, ganz besonders bevorzugt mindestens 500 %. Die Reißdehnung der erfindungsgemäßen Polymerzusammensetzungen beträgt bevorzugt maximal 2000 %.

Die Reißfestigkeit der erfindungsgemäßen Polymerzusammensetzungen beträgt bevorzugt mindestens 2 MPa, besonders bevorzugt mindestens 4 MPa, ganz besonders bevorzugt mindestens 10 MPa. Die Reißfestigkeit der erfindungsgemäßen Polymerzusammensetzungen beträgt bevorzugt maximal 50 MPa.

Die Shore A Härte der erfindungsgemäßen Polymerzusammensetzungen beträgt bevorzugt maximal 80, besonders bevorzugt maximal 75, ganz besonders bevorzugt maximal 70, mindestens jedoch 20.

Die Erweichungstemperatur der erfindungsgemäßen Polymerzusammensetzungen beträgt bei einem Druck von 1000 hPa bevorzugt mindestens 40°C, besonders bevorzugt mindestens 100°C, ganz besonders bevorzugt mindestens 130°C. Die Erweichungstemperatur der erfindungsgemäßen Polymerzusammensetzungen beträgt bei einem Druck von 1000 hPa bevorzugt maximal 220°C.

Die Herstellung der erfindungsgemäßen Zusammensetzungen kann nach beliebiger und an sich bekannter Art und Weise erfolgen, wie etwa durch einfaches Vermischen der einzelnen Komponenten.

Die optionalen Bestandteile, wie z.B. Komponenten (A') sowie Komponenten (C) bis (I), können während des Mischprozesses und/oder nachträglich zur fertigen Zusammensetzungen hinzu gegeben werden.

Ein weiterer Gegenstand der Erfindung ist ein Verfahren zur Herstellung der erfindungsgemäßen Zusammensetzungen, bei dem in einem ersten Schritt

Komponenten (A) und (B) sowie gegebenenfalls eine oder mehrere der Komponenten (A') und (C) bis (I) in einen Reaktor gegeben und aufgeschmolzen und mittels eines Mischaggregats vermischt werden,
in einem zweiten Schritt
die im ersten Schritt erhaltene Mischung ausgetragen und abkühlen gelassen wird sowie
in einem gegebenenfalls durchgeführten dritten Schritt
die im zweiten Schritt erhaltene Mischung gegebenenfalls mit einer oder mehreren der Komponenten (A') und (C) bis (I) vermischt und zerkleinert und/oder granuliert wird.

Beim erfindungsgemäßen Verfahren wird bevorzugt der dritte Schritt durchgeführt.

Falls beim erfindungsgemäßen Verfahren der dritte Schritt durchgeführt wird kann dieser nach Beendigung des zweiten Schritts erfolgen oder simultan mit dem zweiten Schritt durchgeführt werden.

Das erfindungsgemäße Verfahren kann in Anwesenheit oder Abwesenheit von Lösungsmittel stattfinden, wobei die lösungsmittelfreie Herstellung bevorzugt ist.

Das erfindungsgemäße Verfahren kann kontinuierlich, diskontinuierlich oder semikontinuierlich durchgeführt werden, bevorzugt jedoch kontinuierlich.

Die Zugabe der einzelnen Komponenten zum Reaktor im ersten Schritt des erfindungsgemäßen Verfahrens erfolgt dabei entweder separat oder in einer bereits vorgemischten Form, z.B. als vorgemischte Pellets. Dies kann nach den Verfahren nach dem Stand der Technik passieren wie z.B über Dosierschnecken. Die Mischung der Komponenten im Reaktor erfolgt dabei bevorzugt mittels scherenden Elementen wie z.B. Extruderschnecken. Falls erwünscht können die zu mischenden Edukte vor der Verarbeitung nach dem Stand der Technik vorgetrocknet werden.

Das Austragen der gemischten, erfindungsgemäßen Zusammensetzung gemäß zweitem Schritt des erfindungsgemäßen Verfahrens kann dabei ebenfalls durch das Mischaggregat selber erfolgen oder zusätzlich durch eine Transporteinheit wie z.B. einer Schmelzepumpe erfolgen.

Das Gewichtsverhältnis der im ersten Schritt des erfindungsgemäßen Verfahrens eingesetzten Komponente (B) zu thermoplastischem Polyamids (A) liegt im Bereich von bevorzugt 5:95 bis 80:20, besonders bevorzugt bei 10:90 bis 60:40, insbesondere bei 20:80 bis 50:50.

Beim erfindungsgemäßen Verfahren werden bevorzugt mindestens die Schritte 1 bis 2 in kontinuierlich arbeitenden Knetern oder Mischern oder Extrudern durchgeführt, wobei die erfindungsgemäß zu mischenden Einzelkomponenten bevorzugt im ersten Schritt entweder in Reinform oder als Vormischung jeweils gravimetrisch oder volumetrisch dem Mischaggregat kontinuierlich zugeführt werden. Komponenten, die in der Gesamtmischung mit einem Anteil von unter 1 Gew.-% enthalten sind, werden bevorzugt als Vormischung in einer der Komponenten mit einem größeren Anteil zugeführt.

Die Temperaturen, bei denen der erste Schritt des erfindungsgemäße Verfahrens durchgeführt wird, hängen in erster Linie von den eingesetzten Komponenten ab und sind dem Fachmann bekannt, mit der Maßgabe, dass sie unterhalb der spezifischen Zersetzungstemperaturen der einzelnen eingesetzten Komponenten liegen. Bevorzugt wird das erfindungsgemäße Verfahren bei Temperaturen unterhalb von 250°C, besonders bevorzugt im Bereich von 150 bis 220°C, ganz besonders bevorzugt bei Temperaturen von 180 bis 210°C durchgeführt.

Der erste Schritt des erfindungsgemäßen Verfahrens wird bevorzugt beim Druck der umgebenden Atmosphäre, also zwischen 900 und 1100 hPa, durchgeführt. Es können aber auch höhere Drücke angewendet werden, die insbesondere vom verwendeten Mischaggregat abhängen. So ist der Druck in unterschiedlichen Bereichen der verwendeten Kneter, Mischer oder Extruder beispielsweise deutlich größer als 1000 hPa, bevorzugt größer als 10 000 hPa und ganz besonders bevorzugt größer als 20 000 hPa.

Die erfindungsgemäß hergestellte Zusammensetzung liegt dabei bevorzugt in Granulatform oder in Pulverform vor, bevorzugt jedoch in Granulatform. Durch eine entsprechende Granulierungsanlage kann die erfindungsgemäße Zusammensetzung auch als Mikrogranulat erhalten werden.

Nach dem Mischprozess der Einzelkomponenten gemäß erstem Schritt wird die erfindungsgemäße Zusammensetzung dann im zweiten Schritt bevorzugt als heiße, hochviskose Schmelze bevorzugt über eine Düse aus dem Reaktor ausgetragen und abkühlen gelassen, bevorzugt mittels eines Kühlmediums auf Temperaturen zwischen 5°C und 60°C. Dabei wird in einem bevorzugten Verfahren das Material nach dem Austritt mittels eines Kühlmediums abgekühlt und anschließend in einem dritten Schritt zerkleinert bzw. granuliert. Hierbei können das Abkühlen des Materials und das Granulieren simultan durch eine Unterwassergranulierung erfolgen oder nacheinander. Als bevorzugte Kühlmedien werden Wasser oder Luft verwendet. Bevorzugte Verfahren zur Granulierung Abkühlen des Materials und das Granulieren simultan durch eine Unterwassergranulierung erfolgen oder nacheinander. Als bevorzugte Kühlmedien werden Wasser oder Luft verwendet. Bevorzugte Verfahren zur Granulierung sind dabei Unterwassergranulierung, Granulierung mittels Luftabschlag bzw. Stranggranulierung.

Die erfindungsgemäß hergestellten Granulate haben ein Gewicht von bevorzugt weniger als 0,5 g, besonders bevorzugt weniger als 0,25 g, insbesondere weniger als 0,125 g pro Granulatteilchen. Die erfindungsgemäß hergestellten Granulate haben ein Gewicht von bevorzugt mindestens 5 mg pro Granulatteilchen.

Bevorzugt sind die erfindungsgemäß erhaltenen Granulate zylinderförmig oder kugelförmig mit einer bevorzugten Längenausdehnung im Bereich von 0,1 bis 10 mm, besonders bevorzugt 1 bis 7 mm.

Nach einer bevorzugten Ausführungsform des erfindungsgemäßen Verfahrens werden die Einzelkomponenten, vorzugsweise in Pelletform, Pulverform oder in Form von Fasern, gravimetrisch in einen Mehrschneckenextruder dosiert, dort auf Temperaturen zwischen 180 und 210°C aufgeschmolzen und vermischt und mittels einer Schmelzepumpe aus dem Mischaggregat ausgetragen und mittels einer Unterwassergranulierung abgekühlt, pelletiert und getrocknet.

Bei der Herstellung der erfindungsgemäßen Zusammensetzungen ist es weiterhin möglich, dass gegebenenfalls in Komponente (A) und/oder Komponente (B) enthaltene funktionelle Gruppen, wie auch während der Herstellung der erfindungsgemäßen Zusammensetzung, z.B. durch Hydrolyse oder thermischen Bindungsbruch, neu entstehende funktionelle Gruppen, miteinander reagieren zu

Die erfindungsgemäßen Zusammensetzungen sind bevorzugt wiederverarbeitbar. Wie es hierin verwendet wird, bedeutet "wiederverarbeitbar", dass die Zusammensetzungen leicht in anderen konventionellen Formungsvorgängen wie Spritzgussformen und Blasformen verarbeitet werden können. Typischerweise zeigen die erfindungsgemäßen Zusammensetzungen, die anschließend wieder verarbeitet werden, physikalische Eigenschaften (z.B. Zugstärke, Dehnung, Druckverformung und Härte), die ähnlich zu den ursprünglichen Werten sind.

In einer Ausführungsform hat die erfindungsgemäße Zusammensetzung einen Härtewert, gemessen gemäß DIN EN 53505 (Shore A), der 5 Punkte niedriger, besonders bevorzugt 10 Punkte niedriger, ganz besonders bevorzugt 15 Punkte niedriger als der des reinen eingesetzten Polyamids (A) ist.

Die erfindungsgemäßen Polymerzusammensetzungen insbesondere in Form von Granulaten können in einem nachfolgenden Schritt mittels einer weiteren thermoplastischen Verarbeitung zu einem Formkörper, bevorzugt einem Profil, extrudiert werden. Dabei werden nach einer bevorzugten Verfahrensweise die erfindungsgemäßen Zusammensetzungen in Form eines Granulates kontinuierlich in einen Kneter oder Extruder nach dem Stand der Technik gefördert, in diesem Kneter oder Extruder durch Temperatureinwirkung erwärmt und plastifiziert und anschließend durch eine Düse gepresst, die die gewünschte Profilform vorgibt. So können hier je nach Auslegung der Düse entweder Vollprofile aber auch Hohlprofile gefertigt werden.

Ein weiterer Gegenstand der Erfindung sind Formkörper hergestellt durch Extrusion der erfindungsgemäßen Polymerzusammensetzungen.

In einer bevorzugten Ausführung wird die erfindungsgemäße Zusammensetzung direkt über eine passende Düse kontinuierlich als Profil extrudiert, welches dann ebenfalls nach Abkühlen abgelängt bzw. zugeschnitten werden kann.

Die erhaltenen Polymerzusammensetzungen sind bevorzugt thermoplastisch, d.h. die Temperatur, bei welcher der Verlustfaktor (G"/G') gemäß DIN EN ISO 6721-2:2008 den Wert von 1 einnimmt, beträgt bevorzugt mindestens 40°C, besonders bevorzugt mindestens 100°C.

Die erfindungsgemäßen Polymerzusammensetzungen können überall dort verwendet werden, wo auch bisher Polyamide eingesetzt wurden.

Das erfindungsgemäße Verfahren hat den Vorteil, dass auf einfach Weise thermoplastische Elastomere auf Polyamid-Basis hergestellt werden können.

Die erfindungsgemäßen Zusammensetzungen haben den Vorteil, dass sie durch konventionelle Techniken wie Extrusion, Vakuumformen, Spritzformen, Blasformen oder Druckformen verarbeitet werden können. Zudem können diese Zusammensetzungen mit wenig oder keiner Abnahme der mechanischen Eigenschaften wiederverarbeitet (recycelt) werden.

Ferner haben die erfindungsgemäßen Zusammensetzungen den Vorteil, dass sie trotz der geringen Shore A Härten aufgrund des Ferner haben die erfindungsgemäßen Zusammensetzungen den Vorteil, dass sie trotz der geringen Shore A Härten aufgrund des Silikonanteiles deutlich geringere Neigung haben, aneinander zu kleben.

Vorteilhaft ist hier auch, dass die erfindungsgemäßen Polymerzusammensetzungen eine geringere Wasseraufnahme zeigen sowie in der Regel eine stark verbesserte Abriebfestigkeit aufweisen.

Das erfindungsgemäße Verfahren hat den Vorteil, dass die Eigenschaften der thermoplastischen Polymerzusammensetzung gezielt eingestellt werden können, so dass man vor allem weiche Materialien mit einer Shore A Härte von unter 70 bei einer hohen Reißfestigkeit und Reißdehnung erhält.

Des Weiteren hat das erfindungsgemäße Verfahren den Vorteil, dass es universell einsetzbar und sehr flexibel ist und die Polymerzusammensetzungen mit guten Ausbeuten hergestellt werden können.

Die Zusammensetzungen der vorliegenden Erfindung können unter anderem zur Herstellung von Teilen und Komponenten für Automobil-, Elektronik-, elektrische, Kommunikations-, Haushalts- und medizinische Anwendungen verwendet werden. Zum Beispiel können sie verwendet werden, um Draht- und Kabelisolierungen herzustellen; für Automobil- und Haushaltsgerätekomponenten wie Riemen, Schläuche, Faltenbalge, Blasebalge, Dichtungen; für Komponenten von Benzinleitungen und Luftführungen; für Gebäudedichtungen, Flaschenverschlüsse, Möbelbestandteile, weiche Griffe für handgehaltene Vorrichtungen (z.B. Griffe für Werkzeuge), medizinische Vorrichtungen wie Katheter, Sportartikel, zur Beschichtung von Textilien wie z.B. Airbags, Membranen und für allgemeine Gummiteile.

Weitere Anwendungsmöglichkeiten sind Dichtstoffe, Additive für die Polymerverarbeitung wie z.B. Prozesshilfsmittel bei der Thermoplastextrusion, anti-fouling Überzüge, Folien, Lackadditive, Hilfsstoff zum Modifizieren von Harzen oder zur Bitumenmodifizierung, Kunststoffadditiv z.B. als Schlagzähverbesserer oder Flammschutzmittel als Verpackungsmaterial für elektronische Bauteile, in Isolations- oder Abschirmungsmaterialien, in Kabelummantelungen, Beschichtungsmaterial für Holz, Papier und Pappe, Beschichtungsmaterial für Textilfasern oder textile Gewebe, Beschichtungsmaterial für Naturstoffe wie z.B. Leder und Pelze, Material für Membranen oder Bestandteil in Sportgeräten wie z.B. Sportschuhen. Bevorzugte Anwendungen der erfindungsgemäßen Polymerzusammensetzungen sind Verwendungen als thermoplastische Elastomere wie beispielsweise für Kabelumhüllungen, Schläuche, Dichtungen, Tastaturmatten, für Membranen, wie gasdurchlässige Membranen, für Beschichtungsanwendungen z.B. in Antihaftbeschichtungen, gewebeverträglichen Überzügen, flammgehemmten Überzügen und als biokompatible Materialien.

Die erfindungsgemäßen Polymerzusammensetzungen zeigen überraschenderweise hervorragende Eigenschaften bezüglich Haftung und Tieftemperaturelastizität in Spritzgussanwendungen für z.B. den Elektronik- und Medizinbereich oder in Extrusionsanwendungen für Fasern oder technischen Folien.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie führt. Des Weiteren beziehen sich alle Angaben von Teilen und Prozentsätzen, soweit nichts anderes angegeben ist, auf das Gewicht.

In den Beispielen werden folgende Produkte verwendet:
TPE-A 1: thermoplastisches Copolyamid (Copolymer aus Polyamid 12 und Polytetramethylenglykol) mit einer Härte von 81 Shore A (Eigenschaften siehe Tabelle 2) käuflich erhältlich unter der Bezeichnung PEBAX® 3533 bei Arkema SA, FR-Colombes;
TPE-A 2: thermoplastisches Copolyamid (Copolymer aus Polyamid 12 und Polytetramethylenglykol) mit einer Härte von 72 Shore A (Eigenschaften siehe Tabelle 2) käuflich erhältlich unter der Bezeichnung PEBAX® 2533 bei Arkema SA, FR-Colombes;

### Copolymer B1:

In einem Zweiwellenkneter der Firma Collin, D-Ebersberg mit 6 Heizzonen wurde unter Stickstoffatmosphäre in der ersten Heizzone ein Diisocyanat (Methylen-bis-(4-Isocyanatocyclohexan)) (H12MDI) (käuflich erhältlich unter der Bezeichnung Desmodur W bei Covestro AG, D-Leverkusen) und in der zweiten Heizzone ein Bis-aminopropylterminiertes Polydimethylsiloxan mit einem Molekulargewicht von 11 832 g/mol dosiert. Das Temperaturprofil der Heizzonen war wie folgt programmiert: Zone 1 30°C, Zone 2 140°C, Zone 3 170°C, Zone 4 190°C, Zone 5 195°C, Zone 6 185°C. Die Drehzahl betrug 150 U/min. Das Diisocyanat (Methylen-bis-(4-Isocyanatocyclohexan)) (H12MDI) wurde in Zone 1 mit 607 mg/min (139 mmol/h) dosiert, und die Aminölkomponente wurde in Zone 2 mit 27,3 g/min (138,5 mmol/h) dosiert. An der Düse des Extruders wurde ein farbloses, hochtransparentes Polydimethylsiloxan-Polyharnstoff-Blockcopolymer erhalten, welches anschließend granuliert wurde. Das Molekulargewicht betrug 146 800 g/mol (Zahlenmittel), 308 300 g/mol (Gewichtsmittel). Die Shore A Härte betrug 25, der Gehalt an Rest Isocyanat-Gruppen betrug 172 ppm. Die Reißdehnung betrug 425 %. Die Temperatur, bei der der Verlustfaktor (G"/G') gemäß ISO 6721-10 den Wert von 1 einnimmt, lag hier bei 185°C (Messfrequenz 1Hz, Deformation 0,1 %).

### Copolymer B2:

In einem Zweiwellenkneter der Firma Collin, D-Ebersberg mit 6 Heizzonen wurde unter Stickstoffatmosphäre in der ersten Heizzone ein Diisocyanat (Methylen-bis-(4-Isocyanatocyclohexan)) (H12MDI) (käuflich erhältlich unter der Bezeichnung Desmodur W bei Covestro AG, D-Leverkusen) und in der zweiten Heizzone ein Bis-aminopropylterminiertes Polydimethylsiloxan mit einem Molekulargewicht von 14 690 g/mol) dosiert. Das Temperaturprofil der Heizzonen war wie folgt programmiert: Zone 1 30°C, Zone 2 140°C, Zone 3 170°C, Zone 4 190°C, Zone 5 195°C, Zone 6 185°C. Die Drehzahl betrug 150 U/min. Das Diisocyanat (Methylen-bis-(4-Isocyanatocyclohexan)) (H12MDI) wurde in Zone 1 mit 448 mg/min (102,6 mmol/h) dosiert, und die Aminölkomponente wurde in Zone 2 mit 25,0 g/min (102,1 mmol/h) dosiert. An der Düse des Extruders konnte ein farbloses, hochtransparentes Polydimethylsiloxan-Polyharnstoff-Blockcopolymer erhalten werden, welches anschließend granuliert wurde. Das Molekulargewicht betrug 202 400 g/mol (Zahlenmittel), 418 250 g/mol (Gewichtsmittel). Die Shore A Härte betrug 18, der Gehalt an Rest Isocyanat-Gruppen betrug 153 ppm. Die Reißdehnung betrug 525 %. Die Temperatur, bei der der Verlustfaktor (G"/G') gemäß ISO 6721-10 den Wert von 1 einnimmt, lag hier bei 188°C (Messfrequenz 1Hz, Deformation 0,1 %).

### Beispiel 1

1,6 kg TPE-A 1 wurden mit 0,40 kg Copolymer B1 jeweils in Granulatform kontinuierlich über einen Trichter in einem gegenläufigen Zwei-Wellen Extruder ZK 25 der Fa. Collin (D-Ebersberg) in Zone 1 zugegeben und compoundiert. Dabei betrug die Temperatur im Einzugsbereich (Zone 1) 100°C, wurde in Zone 2 auf 180°C und in Zone 3 auf 195°C gesteigert. Zone 4 und Zone 5 hatten 190°C, und die Düse wurde auf 190°C temperiert. Die Umdrehungsgeschwindigkeit der Schnecken betrug 60 Umdrehungen / Minute. Die erhaltene homogene Schmelze wurde als Strang extrudiert, in einem Wasserbad auf 30°C abgekühlt und anschließend mittels eines Stranggranulators granuliert. Man erhielt 1,85 kg Polymerblend mit einem Gehalt an Copolymer B1 von 20 Gew.-%.

### Beispiele 2-6

Die in Beispiel 1 beschriebene Verfahrensweise wird wiederholt mit der Abänderung, dass die in Tabelle 1 aufgeführten Merkmale gewählt wurden.

**Tabelle 1:**

| Beispiel | 1 | 2 | 3 | 4 | 5 | 6 |
|---|---|---|---|---|---|---|
| TPE-A 1 [kg] | 1,6 | 1,2 | | | 1,6 | 1,2 |
| TPE-A 2 [kg] | | | 1,6 | 1,2 | | |
| Copolymer B1 [kg] | 0,4 | 0,8 | 0,4 | 0,8 | | |
| Copolymer B2 [kg] | | | | | 0,4 | 0,8 |
| Heizzone 1 [°C] | 100 | 100 | 100 | 100 | 100 | 100 |
| Heizzone 2 [°C] | 180 | 180 | 180 | 180 | 180 | 180 |
| Heizzone 3 [°C] | 195 | 195 | 195 | 195 | 195 | 195 |
| Heizzone 4 [°C] | 190 | 195 | 195 | 195 | 195 | 195 |
| Heizzone 5 [°C] | 190 | 190 | 190 | 190 | 190 | 190 |
| Heizzone 6 [°C] | 190 | 190 | 190 | 190 | 190 | 190 |
| Umdrehungsgeschwindigkeit [Umdrehung/min] | 60 | 60 | 60 | 60 | 60 | 60 |
| Erhaltene Menge [kg] | 1,80 | 1,95 | 1,85 | 1,85 | 1,90 | 1,90 |

**Tabelle 2: Bestimmung der mechanischen Eigenschaften**

| Beispiel | Reiß-festigkeit [MPa] | Reißdehnung [%] | Shore A | WRW [N/mm] | Dichte [g/cm³] | Abrieb [mg] | Farbe |
|---|---|---|---|---|---|---|---|
| 1 | 13,6 | 897 | 77 | 57,8 | 1,0024 | 10,0 | Weiß |
| 2 | 6,3 | 632 | 68 | 43,1 | 1,0012 | 19,4 | Weiß |
| 3 | 9,8 | 923 | 64 | 38,6 | 1,0020 | 23,2 | Weiß |
| 4 | 5,7 | 814 | 58 | 33,5 | 1,0015 | 32,4 | Weiß |
| 5 | 13,1 | 836 | 75 | 54,0 | 1,0022 | 11,8 | Weiß |
| 6 | 6,8 | 725 | 66 | 42,3 | 1,0015 | 21,0 | Weiß |
| TPE-A 1 | 40,3 | 763 | 81 | 81 | 1,00 | 65 | transluzent |
| TPE-A 2 | 34 | 820 | 72 | 69 | 1,00 | 121 | transluzent |
| Copolymer B1 | 1,2 | 425 % | 28 | n.b. | 1,00 | n.b. | transparent |
| Copolymer B2 | 0,5 | 525 | 22 | n.b. | 1,00 | n.b. | transparent |

| | | | | | | | |
|---|---|---|---|---|---|---|---|
| n.b.: nicht bestimmt | | | | | | | |

Die Bestimmung der mechanischen Eigenschaften erfolgte an spritzgegossenen Prüfkörpern nach einer Lagerung der Prüfkörper von 1 Woche.

Die Shore-A-Härte wird gemäß DIN EN 53505 bestimmt.

Die Reißfestigkeit wird gemäß DIN EN 53504-S1 bestimmt.

Die Reißdehnung wird gemäß DIN EN 53504-S1 bestimmt.

Das 100%-Modul wird gemäß DIN EN 53504-S1 bestimmt.

Der Weiterreißwiderstand (WRW) wird gemäß ASTM D 624 B bestimmt.

Der Abrieb wird gemäß DIN 53516 mit einer Belastung von 10 N und nach einer Strecke von 40 m bestimmt.

Die Dichte wurde gemäß DIN EN ISO 1183 bestimmt.

## Patentansprüche

1. Polymerzusammensetzungen enthaltend
(A) mindestens ein Polyamidpolymer und
(B) mindestens ein Siloxan-Organo-Copolymer mit 50 bis 3000 Siloxaneinheiten pro Siloxansegment und mindestens einem Organosegment mit mindestens einer Gruppe ausgewählt aus Estergruppen, Amid-Gruppen, Urethangruppen, Harnstoffgruppen und Thioharnstoffgruppen der allgemeinen Formel (1) 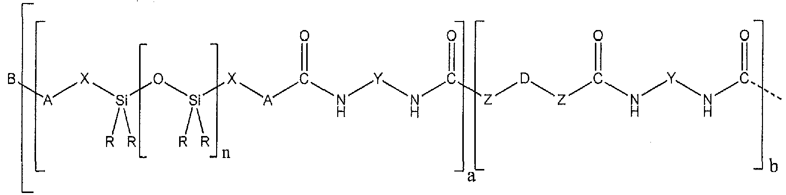 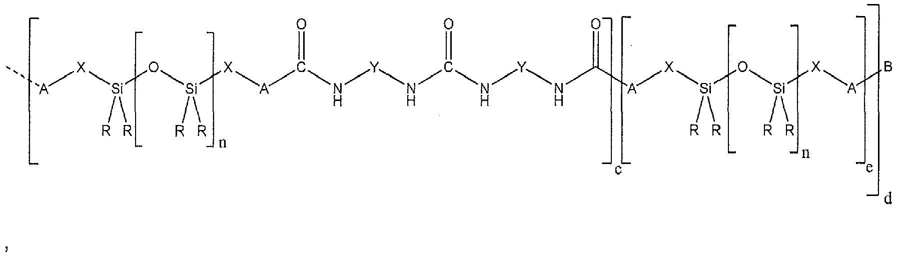 wobei
**R** gleich oder verschieden sein kann und einen einwertigen, SiC-gebundenen, gegebenenfalls durch Fluor- oder Chlor-substituierten Kohlenwasserstoffrest mit 1 bis 20 Kohlenstoffatomen bedeutet,
**X** gleich oder verschieden sein kann und einen Alkylen-Rest mit 1 bis 20 Kohlenstoffatomen, in dem einander nicht benachbarte Methyleneinheiten durch Gruppen -O- ersetzt sein können, bedeutet,
**A** gleich oder verschieden sein kann und Sauerstoffatom, Schwefelatom oder eine Aminogruppe -NR'- bedeutet,
**Z** gleich oder verschieden sein kann und ein Sauerstoffatom oder eine Aminogruppe -NR'- darstellt,
**R'** gleich oder verschieden sein kann und Wasserstoffatom oder einen Alkylrest mit 1 bis 10 Kohlenstoffatomen bedeutet,
**Y** gleich oder verschieden sein kann und einen zweiwertigen, gegebenenfalls durch Fluor oder Chlor substituierten Kohlenwasserstoffrest mit 1 bis 20 Kohlenstoffatomen bedeutet,
**D** gleich oder verschieden sein kann und einen zweiwertigen, gegebenenfalls durch Fluor-, Chlor- oder C₁-C₆-Alkylestergruppen substituierten Kohlenwasserstoffrest bedeutet, in dem einander nicht benachbarte Methyleneinheiten durch Gruppen -O-, -COO-, -OCO- oder -OCOO- ersetzt sein können,
B gleich oder verschieden sein kann und Wasserstoffatom oder einen funktionellen oder nicht-funktionellen organischen oder siliziumorganischen Rest darstellt,
**n** gleich oder verschieden sein kann und eine Zahl von 50 bis 2999 ist,
a eine Zahl von mindestens 1 ist,
**b** 0 oder eine Zahl von 1 bis 100 ist,
**c** 0 oder eine Zahl von 1 bis 100 ist,
d eine Zahl von mindestens 1 ist und
**e** eine Zahl von 0 oder 1 ist.

2. Polymerzusammensetzungen gemäß Anspruch 1, **dadurch gekennzeichnet, dass** in Komponente (B) der Gehalt an Siloxan-Einheiten zwischen 80 und 99,5 Gew.-% liegt.

3. Polymerzusammensetzungen gemäß einem oder mehreren der Ansprüche 1 bis 2, **dadurch gekennzeichnet, dass** es sich bei Komponente (A) um Copolyamide handelt.

4. Polymerzusammensetzungen gemäß einem oder mehreren der Ansprüche 1 bis 3, **dadurch gekennzeichnet, dass** Komponente (A) elastomere Weichsegmente aufweist.

5. Polymerzusammensetzungen gemäß einem oder mehreren der Ansprüche 1 bis 4, **dadurch gekennzeichnet, dass** das Gewichtsverhältnis des Siloxan-Organo-Copolymers (B) zu dem Polyamidpolymer (A) im Bereich von 5:95 bis 80:20 liegt.

6. Verfahren zur Herstellung der Zusammensetzungen gemäß einem oder mehreren der Ansprüche 1 bis 5, bei dem
in einem ersten Schritt
Komponenten (A) und (B) sowie gegebenenfalls eine oder mehrere der Komponenten (A') Polymere vom Nicht-Polyamidtyp, (C) organische oder anorganische Füllstoffe, (D) anorganische Fasern, (E) Flammschutzmittel, (F) Biozide, (G) Pigmente, (H) UV-Absorber und (I) HALS-Stabilisatoren in einen Reaktor gegeben und aufgeschmolzen und mittels eines Mischaggregats vermischt werden,
in einem zweiten Schritt
die im ersten Schritt erhaltene Mischung ausgetragen und abkühlen gelassen wird sowie
in einem gegebenenfalls durchgeführten dritten Schritt die im zweiten Schritt erhaltene Mischung gegebenenfalls mit einer oder mehreren der Komponenten (A') und (C) bis (I) vermischt und zerkleinert und/oder granuliert wird.

7. Verfahren gemäß Anspruch 6, **dadurch gekennzeichnet, dass** der dritte Schritt durchgeführt wird.

8. Formkörper hergestellt durch Extrusion der Polymerzusammensetzungen gemäß einem oder mehreren der Ansprüche 1 bis 5.

## Claims

1. Polymer compositions comprising
(A) at least one polyamide polymer and
(B) at least one siloxane-organic copolymer having 50 to 3000 siloxane units per siloxane segment and at least one organic segment having at least one group selected from ester groups, amide groups, urethane groups, urea groups, and thiourea groups of the general formula (1) 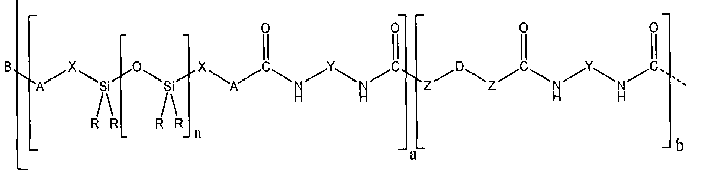 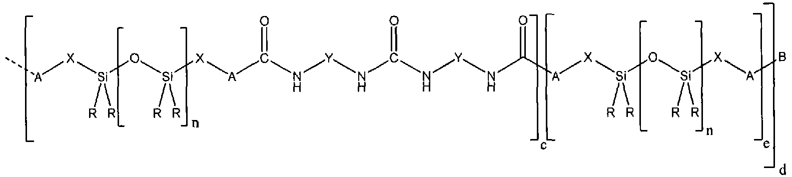 where
**R** may each be identical or different and is a monovalent, SiC-bonded hydrocarbon radical having 1 to 20 carbon atoms and optionally substituted by fluorine or chlorine,
**X** may each be identical or different and is an alkylene radical which has 1 to 20 carbon atoms and in which methylene units not adjacent to one another may have been replaced by -O- groups,
**A** may each be identical or different and is oxygen atom, sulfur atom or an amino group -NR'-,
**Z** may each be identical or different and is an oxygen atom or an amino group -NR'-,
**R'** may each be identical or different and is hydrogen atom or an alkyl radical having 1 to 10 carbon atoms,
**Y** may each be identical or different and is a divalent hydrocarbon radical which has 1 to 20 carbon atoms and is optionally substituted by fluorine or chlorine,
**D** may each be identical or different and is a divalent hydrocarbon radical which is optionally substituted by fluorine, chlorine or C1-C6 alkyl ester groups and in which methylene units not adjacent to one another may have been replaced by -O-, -COO-, -OCO- or -OCOO- groups,
**B** may each be identical or different and is hydrogen atom or a functional or nonfunctional organic or silicon-organic radical,
**n** may each be identical or different and is a number from 50 to 2999,
a is a number which is at least 1,
**b** is 0 or a number from 1 to 100,
**c** is 0 or a number from 1 to 100,
**d** is a number which is at least 1, and
**e** is a number which is 0 or 1.

2. Polymer compositions according to Claim 1, **characterized in that** the amount of siloxane units in component (B) is between 80 and 99.5 wt%.

3. Polymer compositions according to one or more of Claims 1 to 2, **characterized in that** component (A) comprises copolyamides.

4. Polymer compositions according to one or more of Claims 1 to 3, **characterized in that** component (A) has elastomeric flexible segments.

5. Polymer compositions according to one or more of Claims 1 to 4, **characterized in that** the weight ratio of the siloxane-organic copolymer (B) to the polyamide polymer (A) is in the range from 5:95 to 80:20.

6. Method for producing the compositions according to one or more of Claims 1 to 5, wherein
in a first step
components (A) and (B) and also, optionally, one or more of the components (A') nonpolyamide polymers, (C) organic or inorganic fillers, (D) inorganic fibers, (E) flame retardants, (F) biocides, (G) pigments, (H) UV absorbers, and (I) HALS stabilizers are placed into a reactor and melted and are mixed by means of a mixing assembly,
in a second step
the mixture obtained in the first step is discharged and allowed to cool, and
in a third step, carried out optionally,
the mixture obtained in the second step is optionally mixed with one or more of the components (A') and (C) to (I) and is comminuted and/or pelletized.

7. Method according to Claim 6, **characterized in that** the third step is carried out.

8. Molding produced by extruding the polymer compositions according to one or more of Claims 1 to 5.

## Revendications

1. Compositions de polymère contenant
(A) au moins un polymère de polyamide et
(B) au moins un copolymère siloxane-organique comportant 50 à 3000 motifs siloxane par segment siloxane et au moins un segment organique comportant au moins un groupe choisi parmi des groupes ester, des groupes amide, des groupes uréthane, des groupes urée et des groupes thiourée de formule générale (1) 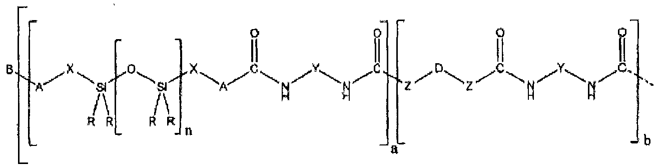 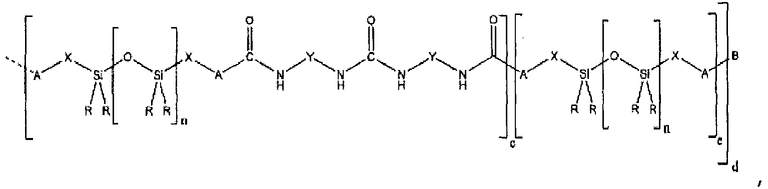
R pouvant être identique ou différent et signifiant un radical hydrocarboné monovalent, lié par SiC, éventuellement substitué par fluor ou chlore, comportant 1 à 20 atome(s) de carbone,
X pouvant être identique ou différent et signifiant un radical alkylène comportant 1 à 20 atome(s) de carbone, dans lequel des motifs méthylène non voisins l'un de l'autre peuvent être remplacés par des groupes -O-,
A pouvant être identique ou différent et signifiant un atome d'oxygène, un atome de soufre ou un groupe amino -NR'-,
Z pouvant être identique ou différent et représentant un atome d'oxygène ou un groupe amino -NR'-,
R' pouvant être identique ou différent et signifiant un atome d'hydrogène ou un radical alkyle comportant 1 à 10 atome(s) de carbone,
Y pouvant être identique ou différent et signifiant un radical hydrocarboné divalent éventuellement substitué par fluor ou chlore comportant 1 à 20 atome(s) de carbone,
D pouvant être identique ou différent et signifiant un radical hydrocarboné divalent éventuellement substitué par des groupes fluor, chlore ou C₁₋₆-alkylester, dans lequel des motifs méthylène non voisins l'un de l'autre peuvent être remplacés par des groupes -O-, -COO-, -OCO- ou -OCOO-,
B pouvant être identique ou différent et représentant un atome d'hydrogène ou un radical organique ou silicium-organique, fonctionnel ou non fonctionnel,
n pouvant être identique ou différent et étant un nombre de 50 à 2999,
a étant un nombre supérieur ou égal à 1,
b étant 0 ou un nombre de 1 à 100,
c étant 0 ou un nombre de 1 à 100,
d étant un nombre supérieur ou égal à 1 et
e étant un nombre de 0 ou 1.

2. Compositions de polymère selon la revendication 1, **caractérisées en ce que** dans le composant (B), la teneur en motifs siloxane est comprise entre 80 et 99,5 % en poids.

3. Compositions de polymère selon l'une ou plusieurs des revendications 1 et 2, **caractérisées en ce que** le composant (A) est un copolyamide.

4. Compositions de polymère selon l'une ou plusieurs des revendications 1 à 3, **caractérisées en ce que** le composant (A) présente des segments souples élastomères.

5. Compositions de polymère selon l'une ou plusieurs des revendications 1 à 4, **caractérisées en ce que** le rapport pondéral du copolymère siloxane-organique (B) au polymère de polyamide (A) se situe dans la plage de 5:95 à 80:20.

6. Procédé pour la préparation des compositions selon l'une ou plusieurs des revendications 1 à 5, dans lequel
dans une première étape
les composants (A) et (B) ainsi qu'éventuellement un ou plusieurs des composants parmi (A') polymères du type non polyamide, (C) des charges organiques ou inorganiques, (D) des fibres inorganiques, (E) des agents ignifugeants, (F) des biocides, (G) des pigments, (H) des absorbants UV et (I) des stabilisants de HALS, sont ajoutés à un réacteur et fondus et mélangés au moyen d'un appareil mélangeur,
dans une deuxième étape
le mélange obtenu dans la première étape est déchargé et laissé à refroidir ainsi que dans une troisième étape éventuellement réalisée le mélange obtenu dans la deuxième étape est mélangé et broyé et/ou granulé avec un ou plusieurs des composants (A') et (C) à (I).

7. Procédé selon la revendication 6, **caractérisé en ce que** la troisième étape est réalisée.

8. Article moulé préparé par extrusion des compositions de polymère selon l'une ou plusieurs des revendications 1 à 5.
